# EUROPEAN PATENT SPECIFICATION

(11) **EP 4 092 314 B1**
(45) Date of publication and mention of the grant of the patent: **20.09.2023**
(21) Application number: 22171770.5
(22) Date of filing: 05.05.2022
(51) Int. Cl.: F17D 3/08, F16L 55/26

(54) **APPARATUS FOR CONTROLLING A PIG**
VORRICHTUNG ZUR KONTROLLE EINES MOLCHS
APPAREIL DE SUIVI D'UN RACLEUR

(30) Priority: 14.05.2021 GB 202106888
(43) Date of publication of application: 23.11.2022
(73) Proprietor: Cokebusters Limited, Chester CH4 0GZ (GB)
(72) Inventor: Phipps, Jonathan, Parkgate (GB); Kremski, Lukasz, Saltney Ferry (GB); Wnuk, Jakub, Sztum (PL)
(74) Representative: Potter Clarkson

(56) References cited:
- EP-B1- 2 902 690
- EP-B1- 3 017 230
- US-A- 4 945 775
- US-A1- 2007 199 383
- US-A1- 2018 363 827

## Description

The invention relates to an apparatus for controlling a run of a pig through a tubular object, a computer-implemented method of controlling a run of a pig through a tubular object and a computer program. The invention is preferably for use with tubular objects in the form of pipes, pipelines, tubes and tubing. Such tubular objects may come in a variety of shapes, such as straight, bent, serpentine and meandering.

Tubing systems in refining furnaces, boilers, fired heaters and other fixed industrial processing apparatuses typically have a sinusoidal path to optimise the exposure of the contents of the tubing systems to heat. Such a sinusoidal path is frequently referred to as being serpentine. Other connecting pipelines, which may be above ground, below ground or under water, can be treated in a similar way for both cleaning and testing using controlled pigs. In a typical tubing system, a product to be treated usually passes through the tubing system that has horizontally and/or vertically set tubes, and the passage of the product through the tubing system may be in a horizontal direction, a downward direction, an upward direction, or a combination thereof. Some tubing systems may include a section of closely packed tubes that may be used to, for example, raise a temperature of the product to be treated by way of convection heating. The pre-heated product may then be passed to a subsequent section of the tubing system in which there is more space between the tubes, and such tubes may be heated by way of radiant heating. Typically, in both sections, the tubing system includes straight tube sections joined by bent tube sections, which may be semicircular (also known as U-bends) or may be box headers with sharp bends in the form of 90 degree turns, sometimes referred to as "horseshoes" and/or "mule ears". Other tubing systems may include at least one helical coiled tube or at least one arbour coiled tube.

The term "pig" is used to refer to devices that are passed through a pipe or tubing whether for cleaning purposes or for monitoring the condition of the pipe or tubing. Pigs may be used for aiding separation of product from the pipe or tubing, in particular identifying material buildup on interior walls of the pipe or tubing, for fluid transport separation, etc.

Pigs may be used to inspect, detect and record conditions of a pipe or tubing from the inside to check the surface conditions of the interior and/or exterior of the pipe or tubing, to check for material deposits on the interior and/or exterior walls of the pipe or tubing and to check for degradation and irregularities in the pipe or tubing. This is important because, if a pipe or tubing is blocked, breached or has a compromised structural integrity during its operation, it could not only lead to costly and disruptive unscheduled downtime but also result in life threatening conditions for nearby people. In addition it is known to wrap or encase pipelines in insulation material. Carrying out inspection of such pipelines from the inside may avoid costly time and effort in removing the insulation material for the purpose of exposing the pipeline's outer surface.

In order for efficient and safe operation of a tubing system, it is important that the tubing system is not only periodically cleaned and free from deposits, but also inspected to ensure the walls of the tubing system are free from undesirable deposits, tube material condition anomalies, wall thinning and/or various forms of metallurgical degradation. Inspection of a pipe or tubing may be performed to assess the need for cleaning and/or repair or to assess the effectiveness of previous cleaning and/or repair.

Conventionally inspections of a pipe or tubing have been performed online through viewing windows and/or by inspecting the pipe manually during shutdown of the pipe or tubing. Monitoring of the condition of a pipe or tubing has also been conventionally carried out by radiography, precision monitoring of flow and pressure, thermal imaging, and hand-held non-destructive testing (NDT) such as ultrasonic testing (UT). However, each of these techniques is limited in its usefulness and has its disadvantages. Manual NDT can be time consuming, for example taking 6-7 days fully to inspect an entire furnace, and also requires abrasive cleaning of the outer wall of the tubing system of the furnace in order to enable successful inspection. Furthermore, a furnace would normally need internal scaffolding to enable the inspection to be carried out, thus costing considerable time. Thermal imaging usually involves searching for hotspots as an indication of contamination, but is not suitable for inspecting closely packed tubes such as seen in convection heating sections. When monitoring is carried out whilst the furnace is in operation, some areas of the tubing system may not be visible through the viewing windows. Furthermore, the far side of the tubing system is either difficult or impossible to monitor using the conventional monitoring techniques. Accordingly it may be necessary to replace one or more sections of the tubing system according to a supplier-provided lifetime warranty, which can result in not only unnecessary replacement of tube sections but also unnecessary and costly downtime of the tubing system. In subsea situations and where accessibility is prevented by normal means, use of controlled pigging can present a unique option for cleaning and material inspection. Alternatives, such as use of skilled/qualified divers or submersible remote operated equipment, can introduce additional dangers and restrictive or prohibitively high costs.

It is known to provide a tethered pig with monitoring equipment and to send it through a pipe. Operation of the equipment is controlled from outside the pipe via a cable. Responses detected by the on-board monitoring equipment are transmitted back along the cable to an external monitoring unit. An apparatus for controlling a run of a pig through a tubular object is known from US2007199383 A1.

According to a first aspect of the invention, there is provided an apparatus for controlling a run of a pig through a tubular object, the apparatus comprising:
a propulsion device for propelling the pig inside the tubular object;
a recording device configured to, in real-time, record operating steps and operating parameters of a human-controlled reference run of the pig through the tubular object; and
a controller programmed to selectively carry out an automatic control mode in which the controller automatically controls a subsequent run of the pig through the tubular object in accordance with the recorded operating steps and operating parameters of the reference run, wherein the automatic control mode includes control of the propulsion device to propel the pig through the tubular object.

The controller may be but is not limited to, for example, a programmable logic controller (PLC).

The configuration of the apparatus of the invention enables the automation of the run of the pig through the tubular object by way of automatic recording and replication of the previous human-controlled reference run of the pig. This results in an apparatus with the capacity to by itself learn from the human-controlled reference run in order to enable performance of an automated run in place of a manually controlled run.

Since the automation of the run relies on a live recording of the human-controlled reference run, the automated run is able to replicate a human operator's controls that can change responsive to variable and/or unexpected conditions of the tubular object. In contrast, an automated run based on standard pre-programmed setpoints will have its limitations because it is designed for a fixed set of conditions of the tubular object, which can result in a sub-optimal run of the pig through the tubular object having different conditions on the day of the run.

Furthermore, the ability to automatically record and replicate the human-controlled reference run addresses inherent reliability and run inefficiency problems that might arise from continuously performing manual runs of the pig through the tubular object. This has the beneficial effect of improving operational efficiency and reducing risk induced by human operator error and limited reaction time.

The invention is applicable to various configurations of the tubular object. As stated above, the invention is preferably for use with tubular objects in the form of pipes, pipelines, tubes and tubing, and such tubular objects may come in a variety of shapes, such as straight, bent, serpentine and meandering. For example, the invention may be applied to closed-loop or oil refinery furnaces that feature end-to-end serpentine coils of tubing or pipework, and/or may be applied to pipelines and tubing systems with restricted access due to, for example, their installation on overhead structures (e.g. overhead gantries), underground, under water bodies (such as a river, a lake or a water course) or under an estuary crossing. Other example applications include: pipelines and tube systems with insulation cladding or other material which restricts visual access and/or access for close hand-held detectors; and heat exchanger bundles, particularly small diameter heat exchange bundles.

The invention is applicable to various applications of the tubular object, such as: commissioning prior to entering production service; pigging; cleaning; and inspection.

Preferably the human-controlled reference run is the current or most recent human-controlled reference run of the pig through the tubular object. Alternatively the human-controlled reference run may be any other previous run that is not the current or most recent human-controlled reference run of the pig through the tubular object.

The apparatus may include:
a pig launcher arranged at a tubular end of the tubular object; and
a first position sensor arranged at or adjacent the pig launcher, wherein the first position sensor is capable of detecting a presence of the pig,
wherein the controller may be programmed to carry out the automatic control mode in which the controller automatically controls the subsequent run of the pig through the tubular object in accordance with the detection of the presence of the pig by the first position sensor.

Programming the controller in this manner provides information about the timing of the launch of the pig from the pig launcher and thereby enables coordination of the automatic control mode with the pig's position relative to the pig launcher. This improves the accuracy of the timing of the automated run. For example, the controller may be programmed to initiate the automated run of the pig through the tubular object when or shortly after the first position sensor detects that the pig has left the pig launcher.

The apparatus may include:
a pig receiver arranged at a tubular end of the tubular object; and
a second position sensor arranged at or adjacent the pig receiver, wherein the second position sensor is capable of detecting a presence of the pig,
wherein the controller may be programmed to carry out the automatic control mode in which the controller automatically controls the subsequent run of the pig through the tubular object in accordance with the detection of the presence of the pig in the pig receiver by the second position sensor.

Programming the controller in this manner provides information about the timing of the receipt of the pig in the pig receiver and thereby enables coordination of the automatic control mode with the detection of the pig's position relative to the pig receiver. This also improves the accuracy of the timing of the automated run. For example, the controller may be programmed to end the automated run of the pig through the tubular object or begin to propel the pig in the opposite direction through the tubular object when or shortly after the second position sensor detects that the pig is in, or has arrived at, the pig receiver.

The location(s) and number of position sensors may vary depending on various requirements of the apparatus (such as ease of sensor installation, measurement accuracy, measurement reliability, etc).

In embodiments of the invention, the sensor arrangement may include at least two position sensors, each position sensor corresponding to a respective location inside the tubular object, each position sensor configured to be capable of detecting the passage of the pig at the respective location inside the tubular object. For example, the sensor arrangement may include first and second position sensors, the first position sensor arranged at or adjacent a first tubular end of the tubular object, the second position sensor arranged at or adjacent a second tubular end of the tubular object.

It will be understood that the sensor arrangement may include one or more further position sensors (e.g. a third position sensor, a fourth position sensor, a fifth position sensor and so on) that may be arranged at other locations along the tubular object. The inclusion of the or each further position sensor is particularly useful for obtaining additional information about the pig's position inside a tubular object having a complex shape, such as serpentine tubular objects, which in turn can be used to provide more accurate real-time tracking of the pig's position in the tubular object.

The controller may be programmed to record a wide range of operating steps and operating parameters of the human-controlled reference run, non-limiting examples of which are described as follows.

In embodiments of the invention, the recording device may be configured to, in real-time, record at least one duration of a propulsion of the pig during the human-controlled reference run of the pig through the tubular object, and
the controller may be programmed to selectively carry out the automatic control mode in which the controller automatically controls the propulsion device during the subsequent run of the pig through the tubular object in accordance with the or each recorded duration of the propulsion of the pig of the reference run.

In further embodiments of the invention, the recording device may be configured to, in real-time, record an increase or decrease in propulsion force applied to the pig during the human-controlled reference run of the pig through the tubular object, and
the controller may be programmed to selectively carry out the automatic control mode in which the controller automatically controls the propulsion device during the subsequent run of the pig through the tubular object in accordance with the recorded increase or decrease in propulsion force applied to the pig of the reference run.

In such embodiments, the recording device may be configured to, in real-time, record a timing of the increase or decrease in propulsion force applied to the pig during the human-controlled reference run of the pig through the tubular object, and
the controller may be programmed to selectively carry out the automatic control mode in which the controller automatically controls the propulsion device during the subsequent run of the pig through the tubular object in accordance with the recorded timing of the increase or decrease in propulsion force applied to the pig of the reference run.

Recording the propulsion parameters of the human-controlled reference run enables the controller to replicate the recorded propulsion of the pig during the automated run.

In still further embodiments of the invention, the apparatus may include an engine or motor that is capable of being mechanically or hydraulically coupled to the propulsion device so as to enable the engine or motor to drive the propulsion device, wherein
the recording device may be configured to, in real-time, record a timing of mechanical or hydraulic coupling between the engine or motor and the propulsion device during the human-controlled reference run of the pig through the tubular object, and
the controller may be programmed to selectively carry out the automatic control mode in which the controller automatically controls the mechanical or hydraulic coupling between the engine or motor and the propulsion device during the subsequent run of the pig through the tubular object in accordance with the or each recorded timing of the mechanical or hydraulic coupling between the engine or motor and the propulsion device of the reference run.

In such embodiments, the engine or motor may be capable of being mechanically or hydraulically decoupled from the propulsion device, wherein
the recording device may be configured to, in real-time, record a timing of mechanical or hydraulic decoupling between the engine or motor and the propulsion device during the human-controlled reference run of the pig through the tubular object, and
the controller may be programmed to selectively carry out the automatic control mode in which the controller automatically controls the mechanical or hydraulic decoupling between the engine or motor and the propulsion device during the subsequent run of the pig through the tubular object in accordance with the or each recorded timing of the mechanical or hydraulic decoupling between the engine or motor and the propulsion device of the reference run.

Recording the coupling and decoupling timing parameters of the human-controlled reference run enables the controller to replicate the recorded timing of the coupling and decoupling between the engine or motor and the propulsion device during the automated run.

The propulsion device is preferably a fluid propulsion device for propelling the pig inside the tubular object using fluid pressure, e.g. a Newtonian fluid propulsion device, but in other embodiments may be any other device that is capable of propelling the pig inside the tubular object, such as an on-board motor.

The apparatus may include a valve arrangement for directing a flow of a fluid inside the tubular object, wherein
the recording device may be configured to, in real-time, record one or more states of the valve arrangement during the human-controlled reference run of the pig through the tubular object, and
the controller may be programmed to selectively carry out the automatic control mode in which the controller automatically controls the valve arrangement during the subsequent run of the pig through the tubular object in accordance with the or each recorded state of the valve arrangement of the reference run.

Recording the valve arrangement parameters of the human-controlled reference run enables the controller to replicate the recorded operation of the valve arrangement during the automated run.

The apparatus may include a fluid contamination level sensor, e.g. an optical sensor, configured to detect a contamination level of a returned fluid from the tubular object, the apparatus further including a fluid flow control device for directing a flow of the returned fluid from the tubular object into a selected one of a clean fluid storage tank and an effluent storage tank, wherein the controller may be programmed to selectively carry out the automatic control mode in which the controller automatically controls the fluid flow control device during the subsequent run of the pig through the tubular object in accordance with the detection of the contamination level of the returned fluid from the tubular object.

Programming the controller in this manner enables the automatic control mode to be responsive to the detected contamination level of the returned fluid from the tubular object during the automated run.

The apparatus may include at least one sensor configured to detect a condition of an interior of the tubular object, wherein the controller may be programmed to selectively carry out the automatic control mode in which the controller automatically controls the propulsion device during the subsequent run of the pig through the tubular object in accordance with the detected condition of the interior of the tubular object.

Programming the controller in this manner enables the automatic control mode to be responsive to the detected condition of the interior of the tubular object during the automated run. The detected information may provide insight into an interior condition of the tubular object, which in turn permits the controller in the automatic control mode to react accordingly. For example, when such information is detected, the propulsion device may be controlled to automatically change a speed or direction of the pig inside the tubular object and/or may act to automatically drive the pig to move back and forth inside a particular section of the tubular object.

In embodiments of the invention, the at least one sensor may include at least one pressure sensor configured to detect a pressure parameter of an interior of the tubular object. The controller may be programmed to selectively carry out the automatic control mode in which the controller automatically controls the propulsion device during the subsequent run of the pig through the tubular object in accordance with the detected pressure parameter of the interior of the tubular object.

In further embodiments of the invention, the at least one sensor may include at least one flow sensor configured to detect a flow parameter of an interior of the tubular object. The controller may be programmed to selectively carry out the automatic control mode in which the controller automatically controls the propulsion device during the subsequent run of the pig through the tubular object in accordance with the detected flow parameter of the interior of the tubular object.

As the pig travels inside the tubular object, changes in pressure and/or flow may take place. This may be due to, for example, the pig transitioning between sections of the tubular object of different shapes and/or sizes or due to the pig approaching a bend or end section of the tubular object. Hence, the pressure and/or flow measurements enable the controller in the automatic control mode to react to changes in the interior condition of the tubular object.

Manual stoppage of the automatic control mode may take place if an operator deems it necessary to change the operating steps and operating parameters of the automated run by recording a new human-controlled reference run. Optionally the apparatus may include an input device for manual input of a stop command by a human. The controller may be programmed to stop the automatic control mode in response to the input of the stop command into the input device.

Automatic stoppage of the automatic control mode may take place through suitable programming of the controller. Optionally the controller may be programmed to selectively carry out the automatic control mode for a single run or a fixed number of consecutive runs. Further optionally the controller may be programmed to selectively carry out the automatic control mode for a fixed duration of time.

The recording device may include a processor and memory including computer program code. The memory and computer program code may be configured to, with the processor, enable the recording device at least to, in real-time, record the operating steps and operating parameters of the human-controlled reference run of the pig through the tubular object.

The controller may include a processor and memory including computer program code. The memory and computer program code may be configured to, with the processor, enable the controller at least to carry out the automatic control mode in which the controller automatically controls the subsequent run of the pig through the tubular object in accordance with the recorded operating steps and operating parameters of the reference run, wherein the automatic control mode includes control of the propulsion device to propel the pig through the tubular object.

Either or both of the recording device and controller may be, may include, may communicate with or may form part of one or more of an electronic device, a portable electronic device, a portable telecommunications device, a microprocessor, a mobile phone, a personal digital assistant, a tablet, a phablet, a desktop computer, a laptop computer, a server, a cloud computing network, a smartphone, a smartwatch, smart eyewear, and a module for one or more of the same.

The recording device and the controller may be separate units, in which case the recording device and the controller may be configured to be in wired and/or wireless communication with each other. Alternatively the recording device and the controller may be part of the same unit, and may share the same processor and/or the same memory.

Optionally one or more sensors of the invention may be configured to be in wireless communication with the controller. This enables remote collection of sensed information. This is not only beneficial for monitoring the pig and/or the tubular object in a dangerous or inaccessible location but also provides the controller with ready access to the real-time sensed information from a chosen location, such as a control room.

The wireless communication may be carried out using wide area network (WAN), Bluetooth^{™} or Wi-Fi equipment. It will be appreciated that, in other embodiments of the invention, the or each sensor may be alternatively or additionally configured to be in wired communication with the controller.

Further optionally the recording device may be configured to log data about the pig's travel inside the tubular object. This enables automatic generation of log sheets with details about the pig's travel through the tubular object, e.g. quantity of runs, duration of runs, operating parameters, etc. As a result, the user or operator would not be required to manually input the data into a log sheet.

According to a second aspect of the invention, there is provided a computer-implemented method of controlling a run of a pig through a tubular object, the computer-implemented method comprising the steps of:
recording operating steps and operating parameters of a human-controlled reference run of the pig through the tubular object; and
carrying out an automatic control mode in which a subsequent run of the pig through the tubular object is automatically controlled in accordance with the recorded operating steps and operating parameters of the reference run, wherein the automatic control mode includes control of a propulsion device to propel the pig through the tubular object.

The features and advantages of the first aspect of the invention and its embodiments apply mutatis mutandis to the features and advantages of the computer-implemented method of the second aspect of the invention and its embodiments.

According to a third aspect of the invention, there is provided a computer program comprising computer code configured to perform the computer-implemented method of any one of the second aspect of the invention and its embodiments.

The features and advantages of the first and second aspects of the invention and their embodiments apply mutatis mutandis to the features and advantages of the computer program of the third aspect of the invention and its embodiments.

It will be appreciated that the use of the terms "first" and "second", and the like, in this patent specification is merely intended to help distinguish between similar features, and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Preferred embodiments of the invention will now be described, by way of non-limiting examples, with reference to the accompanying drawings in which:
Figure 1 shows an apparatus according to an embodiment of the invention; and
Figure 2 shows a pig inside a serpentine heater tube.

The figures are not necessarily to scale, and certain features and certain views of the figures may be shown exaggerated in scale or in schematic form in the interests of clarity and conciseness.

The following embodiments of the invention are described with reference to their use in cleaning of tubes and tubing, such as fired heater, furnace or boiler process tubes, but it will be appreciated that the following embodiments of the invention may also be used in other pigging and inspection operations and other tubular objects, such as clustered small bore heat exchangers, pipes and pipelines.

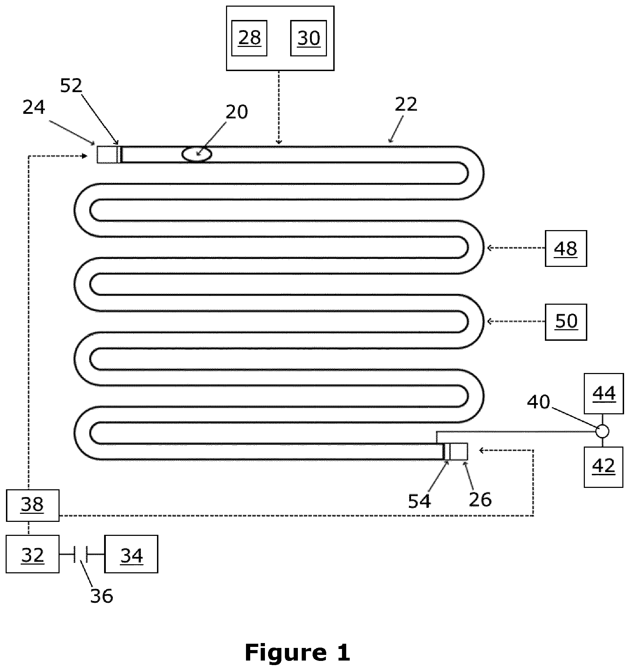

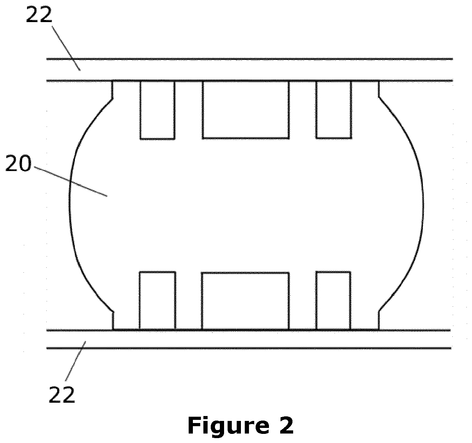

An apparatus according to an embodiment of the invention is shown in Figure 1 and is for controlling a run of a scraper pig 20 inside a serpentine heater tube 22. Figure 2 shows the pig 20 inside the heater tube 22. The apparatus comprises first and second pig launchers 24,26, a sensor arrangement, a desk control system 28 and a programmable logic controller (PLC) 30. It will be appreciated that each of the desk control system 28 and the PLC 30 may be replaced by other types of controllers that provide the same controller functions.

The first and second pig launchers 24,26 are respectively connected to inlet and outlet ends of the heater tube 22. The pig launchers 24,26 also function as pig receivers. In use, the pig 20 is launched from and received by each pig launcher 24,26. The apparatus includes a fluid propulsion device 32 in the form of a fluid pump for providing fluid pressure (e.g. water pressure) to drive the pig 20 through the heater tube 22. Alternatively the pig may be driven by an on-board drive, such as a motor. The pig 20 is preferably driven in both directions through the heater tube 22 but in other embodiments may be driven in only one direction through the heater tube 22.

The apparatus includes an engine 34 and a clutch mechanism 36. Other drive connections may be used in place of the clutch mechanism 36. In use, the clutch mechanism 36 is operable to mechanically couple the engine 34 and the fluid pump 32 so that the engine 34 may drive the fluid pump 32, and the clutch mechanism 36 is operable to mechanically decouple the engine 34 and the fluid pump 32 so that the engine 34 is physically separated from the fluid pump 32.

In some embodiments of the invention, a motor may be used to replace the engine 34. When using a hydraulic or electric motor, the clutch mechanism 36 will not be required. Various drive connections may be used to couple the motor to the fluid pump 32 so that the motor may drive the fluid pump 32. The hydraulic or electric motor may be permanently connected to the fluid pump 32. The motor is controllable to reduce its RPM to 0 by means of a hydraulic or electric motor controller.

The apparatus includes a valve arrangement 38 for directing a flow of a fluid inside the heater tube 22. In use, the valve arrangement 38 may include a single control valve or multiple control valves, and the or each control valve is operable to direct the fluid to flow from the inlet end to the outlet end or from the outlet end to the inlet end.

The apparatus further includes a fluid flow control device 40, e.g. a valve configuration, for directing a flow of the returned fluid from the heater tube 22 into a selected one of a clean fluid storage tank 42 and an effluent storage tank 44. Optionally the apparatus further includes a fluid contamination level sensor 46 configured to detect a contamination level of the returned fluid.

The apparatus includes pressure and flow sensors 48,50 for respectively monitoring pressure and flow parameters of the interior of the heater tube 22. The pressure and flow measurements may be shown on a display screen of the desk control system 28 or a separate display screen or a gauge. When the pig 20 enters the heater tube 22 from a pig launcher 24,26, changes in pressure and/or flow may take place due to, for example, the pig 20 transitioning between sections of the heater tube 22 of different shapes and/or sizes or due to the pig 20 approaching a bend or end section of the heater tube 22. The extent of the changes in pressure and flow parameters of the interior of the heater tube 22 will be vastly different depending on the feature of the heater tube 22 towards which the pig 20 is travelling. For example, a significant increase or decrease in pressure and flow indicates that the pig 20 has reached an end of the heater tube 22. Also, for example, as the pig 20 travels through the heater tube 22, a pressure line chart may appear as a series of "beats" or "spikes", with each beat or spike being associated with a bend.

Operating steps of a decoking or "pigging" run in an exemplary heater tube 22, such as a serpentine furnace tube, is carried out as follows when manually controlled by a human operator using the desk control system 28. The run is described with reference to an initial launch of the pig 20 from the first pig launcher 24 but applies mutatis mutandis to an initial launch of the pig 20 from the second pig launcher 26.
1. The operator inserts a pig 20 into the first pig launcher 24.
2. Via the desk control system 28, the operator sets the valve arrangement so that any fluid pumped into the heater tube 22 flows from the inlet end to the outlet end.
3. Via the desk control system 28, the operator operates the clutch mechanism 36 to mechanically couple the engine 34 and the fluid pump 32. Via the desk control system 28, the operator then starts the engine 34 to drive the fluid pump 32 so that water begins to flow through the heater tube 22.
4. Via the desk control system 28, the operator increases the engine's RPM (e.g. using an electronic potentiometer or Hall effect potentiometer) to apply a fluid propulsion force to the pig 20 and thereby launch it from the pig launcher 24 and drive it through the heater tube 22. The RPM level may vary depending on pig size, interior conditions of the heater tube 22 (such as contamination level), size of the heater tube 22 and so on. The RPM level may change throughout the run as the operator adapts the RPM level in response to variable and/or unexpected conditions of the heater tube 22.
5. The operator monitors the pressure and flow measurements and timings on the display screen of the desk control system 28 as the pig 20 moves through the heater tube 22.
6. When the pig 20 reaches the second pig launcher 26, the operator will observe a drop in pressure and a discolouration of returned water. The discolouration is caused by the fouling removed by the pig 20 during the run.
7. Via the desk control system 28, the operator operates the fluid flow control device 40 to divert the returned fluid so that the returned fluid flows into the effluent storage tank 44 instead of the clean fluid storage tank 42. Meanwhile the fluid pump 32 is controlled to pump water through the heater tube 22 until the returned fluid returns to a clean colour.
8. Once the returned fluid returns to a clear colour, the operator operates the fluid flow control device 40 to divert the returned fluid so that the returned fluid flows into the clean fluid storage tank 42 instead of the effluent storage tank 44.
9. The operator decreases the engine's RPM to switch the engine 34 to an idle state before operating the clutch mechanism 36 to mechanically decouple the engine 34 and the fluid pump 32.
10. The operator reconfigures the valve arrangement 38 so that any fluid pumped into the heater tube 22 flows in the opposite direction from the outlet end to the inlet end.
11. Steps 3 to 9 are repeated, with the fluid flowing and the pig 20 moving in the opposite direction through the heater tube 22.

In embodiments where the motor replaces the engine 34, the RPM of the motor is increased and decreased using a motor RPM controller.

The run can be repeated as many times as required (typically greater than 200 individual runs) as part of an overall decoking process before the heater tube 22 is fully cleaned. Pigs may be changed or renewed after several runs (typically after 10-30 individual runs). It is envisaged that, in other embodiments of the invention, the operating steps may vary, the sequence of operating steps may vary, and/or the operating parameters may vary. For example, steps 10 and 11 may be omitted from the run.

However, there are inherent reliability and inefficiency problems associated with manual control of the decoking run, especially when the run is repeated continuously. Such problems may arise due to, for example, operator error, limited operator reaction time, distractions, operator break/rest requirements and so on, non-limiting examples of which are set out as follows:
- The operator might forget to reduce the engine's RPM before disengaging/engaging the clutch mechanism 36, which can cause mechanical damage to components of the apparatus.
- The operator might forget to divert the contaminated returned fluid into the effluent storage tank 44, thus causing the supply fluid in the clean fluid storage tank 42 to become contaminated.
- When the pig 20 reaches a point of restriction in the heater tube 22, it is usually necessary to reduce the engine's RPM and disengage the clutch mechanism 36. Since the pig 20 reaching the point of restriction can be an unexpected occurrence, there is a risk of the pig 20 getting stuck if the operator is too slow to take the necessary actions.
- Time can be lost when an operator is interrupted (e.g. by clients, engineers or visitors) or takes a rest or break, which may be scheduled or unexpected.

To address these problems, the apparatus of the invention is configured and operated as follows.

The sensor arrangement includes a pair of position sensors . A first position sensor 52 is arranged at the inlet end of the heater tube 22 and adjacent to the first pig launcher 24. A second position sensor 54 is arranged at the outlet end of the heater tube 22 and adjacent to the second pig launcher 26. Each position sensor 52,54 is an electromagnetic pig signaller that is capable of detecting the passage of the pig 20. The pig 20 is fitted with a magnet, such as a neodymium rare earth permanent magnet. The magnet is cast inside, or bolted to an outer core of, the pig 20 at the manufacturing stage. It will be appreciated that other types of sensors may be used as position sensors to detect the passage of the pig 20 travelling inside the heater tube 22. It will be further appreciated that one or more further position sensors (e.g. a third position sensor, a fourth position sensor, a fifth position sensor and so on) may be arranged at other locations along the heater tube 22. For example, a pair of position sensors may be arranged at inlet and outlet ends of each section of the heater tube 22 and/or multiple position sensors may be arranged and spaced apart along a length of each section of the heater tube 22.

The PLC 30 functions as a recording device and a controller. More specifically, the PLC is configured to, in real-time, record the operating steps and the operating parameters of a run of the pig 20 through the heater tube 22 that are controlled and inputted by the operator via the desk control system 28, and the PLC 30 is configured to selectively carry out an automatic control mode in which the PLC automatically replicates the recorded run of the pig 20 through the heater tube 22. In order to carry out the automatic control mode, the PLC 30 is able to control components of the apparatus directly, via the desk control system 28 or a combination of both.

The pig signallers 52,54 are configured to be in wireless communication with the PLC 30, which is exemplarily achieved through a low-power wide-area network (WAN) protocol that is capable of linking battery-operated units. A signal from each pig signaller 52,54 is transmitted through an antenna mounted directly to the pig signaller 52,54 and received at a receiver, e.g. a base station, that is connected to or associated with the PLC 30.

The PLC 30 may be programmed to identify the pig signaller 52,54 from which a given wireless signal originated through evaluation of:
- unique identifiers (such as serial numbers) encoded in the wireless signals transmitted by the pig signallers 52,54; and
- a sequence of the wireless signals transmitted by the pig signallers 52,54. The receipt of a wireless signal from a given pig launcher 24,26 after receiving a wireless signal from the other pig launcher 24,26 indicates that the pig 20 is being received by the corresponding pig launcher 24,26. The receipt of two consecutive wireless signals from a given pig signaller 52,54 indicates that the pig 20 is being launched by the corresponding pig launcher 24,26.

It is envisaged that, in other embodiments of the invention, the wireless communication between the sensor arrangement and the PLC 30 may be carried out using Bluetooth^{™} or Wi-Fi equipment. It is also envisaged that, in still other embodiments of the invention, the sensor arrangement may be configured to be in wired communication with the PLC 30 or configured to be in wired and wireless communication with the PLC 30.

After the signals are received by the PLC 30, the signals are interpreted by a computer program that acts as a serial bus emulator. The information from the pig signallers 52,54 are deciphered and formatted into useable pieces of information that can be recognised and processed by the computer program.

Operating steps of a decoking run are carried out as follows when automatically controlled by the PLC 30 after a decoking run manually controlled by the human operator using the desk control system 28. The run is described with reference to an initial launch of the pig 20 from the first pig launcher 24 but applies mutatis mutandis to an initial launch of the pig 20 from the second pig launcher 26.
1. The operator manually carries out a reference run of the pig 20 through the heater tube 22 using the desk control system 28 as described above.
2. While the human-controlled reference run is being carried out, the PLC 30 at the same time records the operating steps and operating parameters of the human-controlled reference run.
3. After the human-controlled reference run has ended, the PLC 30 ends the recording process.
4. The first pig signaller 52 detects that the pig 20 is in the first pig launcher 24, and sends a signal to inform the PLC 30 about the detected presence of the pig 20 in the first pig launcher 24.
5. The PLC 30 sets the valve arrangement 38 so that any fluid pumped into the heater tube 22 flows from the inlet end to the outlet end. The automatic setting of the state of the valve arrangement 38 by the PLC 30 follows the recorded manual setting of the state of the valve arrangement 38 by the human operator in the reference run.
6. The PLC 30 operates the clutch mechanism 36 to mechanically couple the engine 34 and the fluid pump 32. The PLC then starts the engine to drive the fluid pump so that water begins to flow through the heater tube 22. The automatic control of the timing of the mechanical coupling between the engine 34 and the fluid pump 32 by the PLC 30 follows the recorded manual control of the timing of the mechanical coupling between the engine 34 and the fluid pump 32 by the human operator in the reference run.
7. The PLC increases the engine's RPM (e.g. using an electronic potentiometer) to apply a fluid propulsion force to the pig 20 and thereby launch it from the pig launcher 24 and drive it through the heater tube 22. The automatic control of the increase in the engine's RPM and the timing of the increase by the PLC 30 follows the recorded manual control of the increase in the engine's RPM and the timing of the increase by the human operator in the reference run. The RPM may vary during the automated run in the same way as the reference run. The automatic control of the duration of the propulsion of the pig 20 by the PLC 30 follows the recorded manual control of the duration of the propulsion of the pig 20 by the human operator in the reference run.
8. When the pig 20 reaches the second pig launcher 26, the second pig signaller 54 sends a signal to inform the PLC 30 about the detected presence of the pig 20 in the second pig launcher 26.
12. At this time the PLC 30 controls the fluid flow control device 40 to divert the returned fluid so that the returned fluid flows into the effluent storage tank 44 instead of the clean fluid storage tank 42. Meanwhile the PLC 30 controls the fluid pump 32 to pump water through the heater tube 22 so that the returned fluid returns to a clean colour. Thereafter, the PLC 30 controls the fluid flow control device 40 to divert the returned fluid so that the returned fluid flows into the clean fluid storage tank 42 instead of the effluent storage tank 44. The automatic control of the fluid flow control device 40 and the fluid pump 32 by the PLC 30 follows the recorded manual control of the fluid flow control device 40 and the fluid pump 32 by the human operator in the reference run.
13. The PLC 30 decreases the engine's RPM to switch the engine to an idle state before operating the clutch mechanism 36 to mechanically decouple the engine 34 and the fluid pump 32. The automatic control of the timing of the mechanical decoupling between the engine 34 and the fluid pump 32 by the PLC 30 follows the recorded manual control of the timing of the mechanical decoupling between the engine 34 and the fluid pump 32 by the human operator in the reference run.
14. The PLC 30 reconfigures the valve arrangement 38 so that any fluid pumped into the heater tube 22 flows in the opposite direction from the outlet end to the inlet end. Again, the automatic setting of the state of the valve arrangement 38 by the PLC 30 follows the recorded manual setting of the state of the valve arrangement 38 by the human operator in the reference run.
15. Steps 6 to 13 are repeated by the PLC 30, with the fluid flowing and the pig 20 moving in the opposite direction through the heater tube 22.

In embodiments employing the use of the fluid contamination level sensor 46, any discolouration in the returned fluid may be detected by the fluid contamination level sensor 46 during the automated run, which results in the fluid contamination level sensor 46 sending a signal to the PLC 30 so that the PLC 30 operates the fluid flow control device 40 to temporarily divert the returned fluid so that the returned fluid flows into the effluent storage tank 44 instead of the clean fluid storage tank 42.

The configuration of the apparatus of the invention enables the automation of the run of the pig 20 through the heater tube 22 by way of automatic recording and replication of the previous human-controlled reference run of the pig 20. By automating the run of the pig 20 through the heater tube 22, the decoking process becomes more efficient whilst simultaneously reducing risk induced by human operator error and limited reaction time during manually controlled runs. Furthermore, recording the human-controlled reference run in real time enables the automated run to replicate the human operator's controls that might vary depending on the conditions of the heater tube 22 on the day of the decoking process. On the other hand, an automated run based on standard pre-programmed setpoints is designed for a fixed set of conditions of the heater tube 22 and thereby results in a sub-optimal run of the pig 20 through the heater tube 22 if the conditions of the heater tube 22 differs from the fixed set of conditions.

The automatic control mode by the PLC 30 may be carried out for a single run, for multiple runs or indefinitely without operator involvement until such time as, for example, the pig 20 needs to be replaced by a different pig, e.g. a newer pig, a sharper pig, a larger diameter pig or until such time that the operator feels it necessary to change the operating steps, the operating parameters and/or the sequence of operating steps by recording a new human-controlled reference run.

In addition to the above, the controller of the apparatus may be programmable with desired run setpoints, such as RPM, runtime, pressure, flow or a combination thereof.

Optionally the apparatus may include an input device, such as a button, a lever or an electronic icon on a human-machine interface, for manual input of a stop command so that the operator may manually stop the automatic control mode. In this case the PLC 30 is programmed to stop the automatic control mode in response to the input of the stop command into the input device.

Further the PLC 30 may be programmed to selectively carry out the automatic control mode for a single run or a fixed number of consecutive runs, or may be programmed to selectively carry out the automatic control mode for a fixed duration of time.

The PLC is preferably programmed to record the data about the pig's travel inside the heater tube 22 and automatically generate log sheets with details about the pig's travel through the heater tube 22, e.g. quantity of runs, duration of runs, operating parameters, pressure measurements and timings, flow measurements and timings, etc.

It is envisaged that, in other embodiments of the invention, the PLC 30 may be programmed so that, during the automatic control mode, the PLC can control the fluid pump 32 responsive to pressure measurements and/or flow measurements received from the pressure sensor(s) 48 and/or the flow sensor(s) 50. This enables the PLC 30 in the automatic control mode to, if required, react to changes in the interior condition of the heater tube 22.

The pig 20 may become stuck if it enters a section of the heater tube 22 with reduced internal diameter, which may be caused by internal fouling, use of an oversized pig or a change in tube internal diameter. Therefore, if a pig enters a restriction (high coke build up, or a smaller tube/concentric reducer), the PLC 30 will receive information about a pressure spike and thereby control the fluid pump 32 to reduce or stop the propulsion force. This will lessen the risk of the pig 20 being forced into the restriction and getting stuck.

The interior of the heater tube 22 may be more heavily contaminated in one particular section. Consequently it may be desirable to operate the pig 20 to move back and forth inside the particular section to remove the heavy contamination. Therefore, when the pig 20 arrives at the heavily contaminated section, the PLC 30 will receive pressure and/or flow information corresponding to the heavily contaminated section and thereby control the fluid pump 32 to drive the pig 20 to move back and forth inside the heavily contaminated section.

The invention is applicable to an apparatus in the form of a single pumping unit, a double pumping unit, a quad pumping unit or a unit having a different number of fluid pumps. In embodiments employing the use of multiple fluid pumps, each fluid pump may be used to drive a respective pig to decoke a respective one of a plurality of heater tubes. The recordal of the operating steps and operating parameters of the human-controlled reference run and the subsequent automatic control mode may be carried out in respect of each heater tube independently. Alternatively the recordal of the operating steps and operating parameters of the human-controlled reference run may be carried out for one of the heater tubes, and the subsequent automatic control mode may be carried out for multiple heater tubes based on the same human-controlled reference run.

It will be appreciated that the above numerical values are merely intended to help illustrate the working of the invention and may vary depending on the requirements of the apparatus and the associated application.

The listing or discussion of an apparently prior-published document or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention as presented in the appended claims.

## Claims

1. An apparatus for controlling a run of a pig (20) through a tubular object (22), the apparatus comprising:
a propulsion device (32) for propelling the pig (20) inside the tubular object (22);
a recording device (30) configured to, in real-time, record operating steps and operating parameters of a human-controlled reference run of the pig (20) through the tubular object (22); and
a controller (30) programmed to selectively carry out an automatic control mode in which the controller automatically controls a subsequent run of the pig (20) through the tubular object (22) in accordance with the recorded operating steps and operating parameters of the reference run, wherein the automatic control mode includes control of the propulsion device to propel the pig (20) through the tubular object (22).

2. An apparatus according to Claim 1 including:
a pig launcher (24) arranged at a tubular end of the tubular object (22); and
a first position sensor (52) arranged at or adjacent the pig launcher (24), wherein the first position sensor (52) is capable of detecting a presence of the pig (20),
wherein the controller (30) may be programmed to carry out the automatic control mode in which the controller (30) automatically controls the subsequent run of the pig (20) through the tubular object (22) in accordance with the detection of the presence of the pig (20) by the first position sensor (52).

3. An apparatus according to any one of the preceding claims including:
a pig receiver (26) arranged at a tubular end of the tubular object (22); and
a second position sensor (54) arranged at or adjacent the pig receiver (26), wherein the second position sensor (54) is capable of detecting a presence of the pig (20),
wherein the controller (30) is programmed to carry out the automatic control mode in which the controller (30) automatically controls the subsequent run of the pig (20) through the tubular object (22) in accordance with the detection of the presence of the pig (20) by the second position sensor (54).

4. An apparatus according to any one of the preceding claims wherein
the recording device (30) is configured to, in real-time, record at least one duration of a propulsion of the pig (20) during the human-controlled reference run of the pig (20) through the tubular object (22), and
the controller (30) is programmed to selectively carry out the automatic control mode in which the controller (30) automatically controls the propulsion device (32) during the subsequent run of the pig (20) through the tubular object (22) in accordance with the or each recorded duration of the propulsion of the pig (20) of the reference run.

5. An apparatus according to any one of the preceding claims wherein
the recording device (30) is configured to, in real-time, record an increase or decrease in propulsion force applied to the pig (20) during the human-controlled reference run of the pig (20) through the tubular object (22), and
the controller (30) is programmed to selectively carry out the automatic control mode in which the controller automatically controls the propulsion device (32) during the subsequent run of the pig (20) through the tubular object (22) in accordance with the recorded increase or decrease in propulsion force applied to the pig (20) of the reference run.

6. An apparatus according to any one of the preceding claims including an engine or motor (34) that is capable of being mechanically or hydraulically coupled to the propulsion device (32) so as to enable the engine or motor (34) to drive the propulsion device (32), wherein
the recording device (30) is configured to, in real-time, record a timing of mechanical or hydraulic coupling between the engine or motor (34) and the propulsion device (32) during the human-controlled reference run of the pig (20) through the tubular object (22), and
the controller (30) is programmed to selectively carry out the automatic control mode in which the controller (30) automatically controls the mechanical or hydraulic coupling between the engine or motor (34) and the propulsion device (32) during the subsequent run of the pig (22) through the tubular object (22) in accordance with the or each recorded timing of the mechanical or hydraulic coupling between the engine or motor (34) and the propulsion device (32) of the reference run.

7. An apparatus according to Claim 6 wherein the engine or motor (34) is capable of being mechanically or hydraulically decoupled from the propulsion device (32), wherein
the recording device (30) is configured to, in real-time, record a timing of mechanical or hydraulic decoupling between the engine or motor (34) and the propulsion device (32) during the human-controlled reference run of the pig (20) through the tubular object (22), and
the controller (30) is programmed to selectively carry out the automatic control mode in which the controller (30) automatically controls the mechanical or hydraulic decoupling between the engine or motor (34) and the propulsion device (32) during the subsequent run of the pig (20) through the tubular object (22) in accordance with the or each recorded timing of the mechanical or hydraulic decoupling between the engine or motor(34) and the propulsion device (32) of the reference run.

8. An apparatus according to any one of the preceding claims including a valve arrangement (38) for directing a flow of a fluid inside the tubular object (22), wherein
the recording device (30) is configured to, in real-time, record one or more states of the valve arrangement (38) during the human-controlled reference run of the pig (20) through the tubular object (22), and
the controller (30) is programmed to selectively carry out the automatic control mode in which the controller (30) automatically controls the valve arrangement (38) during the subsequent run of the pig (20) through the tubular object (22) in accordance with the or each recorded state of the valve arrangement (38) of the reference run.

9. An apparatus according to any one of the preceding claims including a fluid contamination level sensor configured to detect a contamination level of a returned fluid from the tubular object (22), the apparatus further including a fluid flow control device (40) for directing a flow of the returned fluid from the tubular object (22) into a selected one of a clean fluid storage tank (42) and an effluent storage tank (44), wherein the controller (30) is programmed to selectively carry out the automatic control mode in which the controller (30) automatically controls the fluid flow control device (40) during the subsequent run of the pig (20) through the tubular object (22) in accordance with the detection of the contamination level of the returned fluid from the tubular object (22).

10. An apparatus according to any one of the preceding claims including at least one sensor configured to detect a condition of an interior of the tubular object (22), wherein the controller (30) is programmed to selectively carry out the automatic control mode in which the controller (30) automatically controls the propulsion device (32) during the subsequent run of the pig (20) through the tubular object (22) in accordance with the detected condition of the interior of the tubular object (22).

11. An apparatus according to any one of the preceding claims wherein the at least one sensor includes at least one pressure sensor (48) configured to detect a pressure parameter of an interior of the tubular object (22), wherein the controller (30) is programmed to selectively carry out the automatic control mode in which the controller (30) automatically controls the propulsion device (32) during the subsequent run of the pig (20) through the tubular object (22) in accordance with the detected pressure parameter of the interior of the tubular object (22).

12. An apparatus according to any one of the preceding claims wherein the at least one sensor includes at least one flow sensor (50) configured to detect a flow parameter of an interior of the tubular object (22), wherein the controller (30) is programmed to selectively carry out the automatic control mode in which the controller (30) automatically controls the propulsion device (32) during the subsequent run of the pig (20) through the tubular object (22) in accordance with the detected flow parameter of the interior of the tubular object (22).

13. An apparatus according to any one of the preceding claims including an input device for manual input of a stop command by a human, wherein the controller (30) is programmed to stop the automatic control mode in response to the input of the stop command into the input device.

14. A computer-implemented method of controlling a run of a pig (20) through a tubular object (22), the computer-implemented method comprising the steps of:
recording operating steps and operating parameters of a human-controlled reference run of the pig (20) through the tubular object (22); and
carrying out an automatic control mode in which a subsequent run of the pig (20) through the tubular object (22) is automatically controlled in accordance with the recorded operating steps and operating parameters of the reference run, wherein the automatic control mode includes control of a propulsion device (32) to propel the pig (20) through the tubular object (22).

15. A computer program comprising computer code configured to perform the computer-implemented method of Claim 14.

## Patentansprüche

1. Vorrichtung zum Steuern des Laufs eines Molches (20) durch einen rohrförmigen Gegenstand (22), wobei die Vorrichtung Folgendes umfasst:
eine Antriebsvorrichtung (32) zum Vortreiben des Molches (20) innerhalb des röhrenförmigen Gegenstands (22) ;
ein Aufzeichnungsgerät (30), das so konfiguriert ist, dass es in Echtzeit Arbeitsschritte und Betriebsparameter eines vom Menschen gesteuerten Referenzlaufs des Molches (20) durch den rohrförmigen Gegenstand (22) aufzeichnet; und
eine Steuerung (30), die so programmiert ist, dass sie selektiv einen automatischen Steuerungsmodus ausführt, in dem die Steuerung automatisch einen nachfolgenden Lauf des Molches (20) durch den rohrförmigen Gegenstand (22) gemäß den aufgezeichneten Betriebsschritten und Betriebsparametern des Referenzlaufs steuert, wobei der automatische Steuermodus die Steuerung der Antriebsvorrichtung umfasst, um den Molch (20) durch den rohrförmigen Gegenstand (22) anzutreiben.

2. Vorrichtung nach Anspruch 1, umfassend:
einen Molchwerfer (24), der an einem röhrenförmigen Ende des röhrenförmigen Gegenstands (22) angeordnet ist; und
einen ersten Positionssensor (52), der an oder neben dem Molchwerfer (24) angeordnet ist, wobei der erste Positionssensor (52) in der Lage ist, eine Anwesenheit des Molches (20) zu erkennen,
wobei die Steuerung (30) so programmiert sein kann, dass sie den automatischen Steuermodus ausführt, in dem die Steuerung (30) automatisch den anschließenden Lauf des Molches (20) durch den rohrförmigen Gegenstand (22) entsprechend der Erkennung der Anwesenheit des Molches (20) durch den ersten Positionssensor (52) steuert.

3. Vorrichtung nach einem der vorhergehenden Ansprüche, einschließlich:
einen Molchempfänger (26), der an einem röhrenförmigen Ende des röhrenförmigen Gegenstands (22) angeordnet ist; und
einen zweiten Positionssensor (54), der an oder neben dem Molchempfänger (26) angeordnet ist,
wobei der zweite Positionssensor (54) in der Lage ist, eine Anwesenheit des Molches (20) zu erkennen, wobei die Steuerung (30) so programmiert ist, dass sie den automatischen Steuermodus ausführt, in dem die Steuerung (30) automatisch den anschließenden Lauf des Molches (20) durch den rohrförmigen Gegenstand (22) entsprechend der Erkennung der Anwesenheit des Molches (20) durch den zweiten Positionssensor (54) steuert.

4. Vorrichtung nach einem der vorhergehenden Ansprüche, wobei
das Aufzeichnungsgerät (30) dazu eingerichtet ist, in Echtzeit zumindest eine Dauer eines Vortriebs des Molches (20) während des vom Menschen gesteuerten Referenzlaufs des Molches (20) durch den rohrförmigen Gegenstand (22) aufzuzeichnen, und
die Steuerung (30) so programmiert ist, dass sie wahlweise den automatischen Steuermodus ausführt, in dem die Steuerung (30) die Antriebsvorrichtung (32) beim anschließenden Lauf des Molches (20) durch den rohrförmigen Gegenstand (22) entsprechend der oder jeder erfassten Dauer des Vortriebs des Molches (20) des Referenzlaufs automatisch steuert.

5. Vorrichtung nach einem der vorhergehenden Ansprüche, wobei
das Aufzeichnungsgerät (30) so konfiguriert ist, dass es in Echtzeit eine Zunahme oder Abnahme der auf den Molch (20) ausgeübten Vortriebskraft während des vom Menschen gesteuerten Referenzlaufs des Molches (20) durch den rohrförmigen Gegenstand (22) aufzeichnet, und die Steuerung (30) so programmiert ist, dass sie wahlweise den automatischen Steuermodus ausführt, in dem die Steuerung die Antriebsvorrichtung (32) beim anschließenden Lauf des Molches (20) durch den rohrförmigen Gegenstand (22) entsprechend der aufgezeichneten Zunahme oder Abnahme der auf den Molch (20) des Referenzlaufs ausgeübten Vortriebskraft automatisch steuert.

6. Vorrichtung nach einem der vorhergehenden Ansprüche, einschließlich eines Verbrennungsmotors oder Motors (34), der mechanisch oder hydraulisch mit der Antriebsvorrichtung (32) gekoppelt werden kann, um es dem Verbrennungsmotor oder Motor (34) zu ermöglichen, die Antriebsvorrichtung (32) anzutreiben, wobei das Aufzeichnungsgerät (30) so konfiguriert ist, dass es in Echtzeit einen Zeitpunkt der mechanischen oder hydraulischen Kopplung zwischen dem Verbrennungsmotor oder Motor (34) und der Antriebsvorrichtung (32) während des menschengesteuerten Referenzlaufs des Molches (20) durch den rohrförmigen Gegenstand (22) aufzeichnet, und
die Steuerung (30) so programmiert ist, dass sie wahlweise den automatischen Steuermodus ausführt, in dem die Steuerung (30) automatisch die mechanische oder hydraulische Kopplung zwischen dem Verbrennungsmotor bzw. Motor (34) und der Antriebsvorrichtung (32) beim anschließenden Durchlauf des Molches (22) durch den rohrförmigen Gegenstand (22) in Übereinstimmung mit dem oder jedem aufgezeichneten Zeitpunkt der mechanischen oder hydraulischen Kopplung zwischen dem Verbrennungsmotor oder Motor (34) und der Antriebsvorrichtung (32) des Referenzlaufs steuert.

7. Vorrichtung nach Anspruch 6, wobei der Verbrennungsmotor oder Motor (34) mechanisch oder hydraulisch von der Antriebsvorrichtung (32) entkoppelt werden kann, wobei
das Aufzeichnungsgerät (30) dazu konfiguriert ist, in Echtzeit einen Zeitpunkt der mechanischen oder hydraulischen Entkopplung zwischen dem Verbrennungsmotor oder Motor (34) und der Antriebsvorrichtung (32) während des menschengesteuerten Referenzlaufs des Molches (20) durch den rohrförmigen Gegenstand (22) aufzuzeichnen, und
die Steuerung (30) so programmiert ist, dass sie wahlweise den automatischen Steuermodus ausführt, in dem die Steuerung (30) die mechanische oder hydraulische Entkopplung zwischen dem Verbrennungsmotor bzw. Motor (34) und der Antriebsvorrichtung (32) beim anschließenden Durchlauf des Molches (20) durch den rohrförmigen Gegenstand (22) in Übereinstimmung mit dem oder jedem aufgezeichneten Zeitpunkt der mechanischen oder hydraulischen Entkopplung zwischen dem Verbrennungsmotor oder Motor (34) und der Antriebsvorrichtung (32) des Referenzlaufs automatisch steuert.

8. Vorrichtung nach einem der vorhergehenden Ansprüche, umfassend eine Ventilanordnung (38) zum Lenken eines Flusses eines Fluids in das Innere des röhrenförmigen Gegenstands (22), wobei
das Aufzeichnungsgerät (30) dazu konfiguriert ist, in Echtzeit einen oder mehrere Zustände der Ventilanordnung (38) während des vom Menschen gesteuerten Referenzlaufs des Molches (20) durch den rohrförmigen Gegenstand (22) aufzuzeichnen, und
die Steuerung (30) so programmiert ist, dass sie wahlweise den automatischen Steuermodus ausführt, in dem die Steuerung (30) die Ventilanordnung (38) beim anschließenden Durchlauf des Molches (20) durch den rohrförmigen Gegenstand (22) entsprechend dem oder jedem erfassten Zustand der Ventilanordnung (38) des Referenzlaufs automatisch steuert.

9. Vorrichtung nach einem der vorhergehenden Ansprüche, umfassend einen Fluidverschmutzungsgradsensor, der so konfiguriert ist, dass er einen Verschmutzungsgrad eines aus dem röhrenförmigen Gegenstand (22) zurückgeführten Fluids erfasst, wobei die Vorrichtung weiterhin eine Fluidfluss-Steuervorrichtung (40) umfasst, um einen Fluss des zurückgeführten Fluids von dem röhrenförmigen Gegenstand (22) in einen ausgewählten Speichertank (42) für sauberes Fluid oder einen Abwasserspeichertank (44) zu leiten, wobei die Steuerung (30) so programmiert ist, dass sie selektiv den automatischen Steuermodus ausführt, in dem die Steuerung (30) die Fluidfluss-Steuervorrichtung (40) während des anschließenden Laufs des Molches (20) durch den rohrförmigen Gegenstand (22) entsprechend der Erkennung des Verschmutzungsgrads des aus dem röhrenförmigen Gegenstand (22) zurückgeführten Fluids automatisch steuert.

10. Vorrichtung nach einem der vorhergehenden Ansprüche, umfassend mindestens einen Sensor, der so konfiguriert ist, dass er einen Zustand im Inneren des röhrenförmigen Gegenstands (22) erkennt, wobei die Steuerung (30) so programmiert ist, dass sie selektiv den automatischen Steuermodus ausführt, in dem die Steuerung (30) die Antriebsvorrichtung (32) beim anschließenden Lauf des Molches (20) durch den rohrförmigen Gegenstand (22) entsprechend dem erfassten Zustand des Inneren des röhrenförmigen Gegenstands (22) automatisch steuert.

11. Vorrichtung nach einem der vorhergehenden Ansprüche, wobei der mindestens eine Sensor mindestens einen Drucksensor (48) umfasst, der dazu konfiguriert ist, einen Druckparameter eines Inneren des röhrenförmigen Gegenstands (22) zu erfassen, wobei die Steuerung (30) so programmiert ist, dass sie selektiv den automatischen Steuermodus ausführt, in dem die Steuerung (30) die Antriebsvorrichtung (32) während des anschließenden Laufs des Molches (20) durch den rohrförmigen Gegenstand (22) in Übereinstimmung mit dem erfassten Druckparameter des Inneren des röhrenförmigen Gegenstands (22) automatisch steuert.

12. Vorrichtung nach einem der vorhergehenden Ansprüche, wobei der mindestens eine Sensor mindestens einen Strömungssensor (50) umfasst, der dazu konfiguriert ist, einen Strömungsparameter eines Inneren des röhrenförmigen Gegenstands (22) zu erfassen, wobei die Steuerung (30) so programmiert ist, dass sie selektiv den automatischen Steuermodus ausführt, in dem die Steuerung (30) die Antriebsvorrichtung (32) während des anschließenden Laufs des Molches (20) durch den rohrförmigen Gegenstand (22) in Übereinstimmung mit dem erfassten Strömungsparameter des Inneren des rohrförmigen Gegenstands (22) automatisch steuert.

13. Vorrichtung nach einem der vorhergehenden Ansprüche, umfassend ein Eingabegerät zur manuellen Eingabe eines Stoppbefehls durch einen Menschen, wobei die Steuerung (30) so programmiert ist, dass sie den automatischen Steuermodus als Reaktion auf die Eingabe des Stoppbefehls in das Eingabegerät stoppt.

14. Computerimplementiertes Verfahren zum Steuern eines Laufs eines Molches (20) durch einen röhrenförmigen Gegenstand (22), wobei das computerimplementierte Verfahren die folgenden Schritte umfasst:
Aufzeichnen von Arbeitsschritten und Betriebsparametern eines menschengesteuerten Referenzlaufs des Molches (20) durch den rohrförmigen Gegenstand (22); und Durchführen eines automatischen Steuermodus, in dem ein nachfolgender Durchlauf des Molches (20) durch den rohrförmigen Gegenstand (22) entsprechend den erfassten Arbeitsschritten und Betriebsparametern des Referenzlaufs automatisch gesteuert wird, wobei der automatische Steuermodus die Steuerung einer Antriebsvorrichtung (32) umfasst, um den Molch (20) durch den rohrförmigen Gegenstand (22) anzutreiben.

15. Computerprogramm, das einen Computercode umfasst, der so konfiguriert ist, dass er das computerimplementierte Verfahren nach Anspruch 14 durchführt.

## Revendications

1. Appareil pour contrôler le passage d'un racleur (20) à travers un objet tubulaire (22), l'appareil comprenant :
un dispositif de propulsion (32) pour propulser le racleur (20) à l'intérieur de l'objet tubulaire (22) ;
un dispositif d'enregistrement (30) configuré pour enregistrer en temps réel des étapes de fonctionnement et des paramètres de fonctionnement d'un passage de référence contrôlé par l'homme du racleur (20) à travers l'objet tubulaire (22) ; et
un contrôleur (30) programmé pour exécuter sélectivement un mode de contrôle automatique dans lequel le contrôleur contrôle automatiquement un passage ultérieur du racleur (20) à travers l'objet tubulaire (22) conformément aux étapes de fonctionnement et aux paramètres de fonctionnement enregistrés du passage de référence, dans lequel le mode de contrôle automatique comprend le contrôle du dispositif de propulsion pour propulser le racleur (20) à travers l'objet tubulaire (22) .

2. Appareil selon la revendication 1 comprenant :
un lanceur de racleur (24) agencé à une extrémité tubulaire de l'objet tubulaire (22) ; et
un premier capteur de position (52) agencé au niveau du ou adjacent au lanceur de racleur (24), dans lequel le premier capteur de position (52) est capable de détecter une présence du racleur (20),
dans lequel le contrôleur (30) peut être programmé pour exécuter le mode de contrôle automatique dans lequel le contrôleur (30) contrôle automatiquement le passage ultérieur du racleur (20) à travers l'objet tubulaire (22) conformément à la détection de la présence du racleur (20) par le premier capteur de position (52).

3. Appareil selon l'une quelconque des revendications précédentes comprenant :
un récepteur de racleur (26) agencé à une extrémité tubulaire de l'objet tubulaire (22) ; et
un second capteur de position (54) agencé au niveau du ou adjacent au récepteur de racleur (26), dans lequel le second capteur de position (54) est capable de détecter une présence du racleur (20),
dans lequel le contrôleur (30) est programmé pour exécuter le mode de contrôle automatique dans lequel le contrôleur (30) contrôle automatiquement le passage ultérieur du racleur (20) à travers l'objet tubulaire (22) conformément à la détection de la présence du racleur (20) par le second capteur de position (54).

4. Appareil selon l'une quelconque des revendications précédentes, dans lequel
le dispositif d'enregistrement (30) est configuré pour enregistrer en temps réel au moins une durée d'une propulsion du racleur (20) pendant le passage de référence contrôlé par l'homme du racleur (20) à travers l'objet tubulaire (22), et
le contrôleur (30) est programmé pour exécuter sélectivement le mode de contrôle automatique dans lequel le contrôleur (30) contrôle automatiquement le dispositif de propulsion (32) pendant le passage ultérieur du racleur (20) à travers l'objet tubulaire (22) conformément à la ou à chaque durée enregistrée de la propulsion du racleur (20) du passage de référence.

5. Appareil selon l'une quelconque des revendications précédentes, dans lequel
le dispositif d'enregistrement (30) est configuré pour enregistrer en temps réel une augmentation ou une diminution de la force de propulsion appliquée au racleur (20) pendant le passage de référence contrôlé par l'homme du racleur (20) à travers l'objet tubulaire (22), et
le contrôleur (30) est programmé pour exécuter sélectivement le mode de contrôle automatique dans lequel le contrôleur contrôle automatiquement le dispositif de propulsion (32) pendant le passage ultérieur du racleur (20) à travers l'objet tubulaire (22) conformément à l'augmentation ou à la diminution enregistrée de la force de propulsion appliquée au racleur (20) du passage de référence.

6. Appareil selon l'une quelconque des revendications précédentes, comprenant un propulseur ou un moteur (34) qui peut être couplé mécaniquement ou hydrauliquement au dispositif de propulsion (32) de manière à permettre au propulseur ou au moteur (34) d'entraîner le dispositif de propulsion (32), dans lequel
le dispositif d'enregistrement (30) est configuré pour enregistrer en temps réel un instant de couplage mécanique ou hydraulique entre le propulseur ou le moteur (34) et le dispositif de propulsion (32) pendant le passage de référence contrôlé par l'homme du racleur (20) à travers l'objet tubulaire (22), et
le contrôleur (30) est programmé pour exécuter sélectivement le mode de contrôle automatique dans lequel le contrôleur (30) contrôle automatiquement le couplage mécanique ou hydraulique entre le propulseur ou le moteur (34) et le dispositif de propulsion (32) pendant le passage ultérieur du racleur (22) à travers l'objet tubulaire (22) conformément au ou à chaque instant enregistré du couplage mécanique ou hydraulique entre le propulseur ou le moteur (34) et le dispositif de propulsion (32) du passage de référence.

7. Appareil selon la revendication 6, dans lequel le propulseur ou le moteur (34) est capable d'être mécaniquement ou hydrauliquement découplé du dispositif de propulsion (32), dans lequel
le dispositif d'enregistrement (30) est configuré pour enregistrer en temps réel un instant de découplage mécanique ou hydraulique entre le propulseur ou le moteur (34) et le dispositif de propulsion (32) pendant le passage de référence contrôlé par l'homme du racleur (20) à travers l'objet tubulaire (22), et
le contrôleur (30) est programmé pour exécuter sélectivement le mode de contrôle automatique dans lequel le contrôleur (30) contrôle automatiquement le découplage mécanique ou hydraulique entre le propulseur ou le moteur (34) et le dispositif de propulsion (32) pendant le passage ultérieur du racleur (20) à travers l'objet tubulaire (22) conformément au ou à chaque instant enregistré du découplage mécanique ou hydraulique entre le propulseur ou le moteur (34) et le dispositif de propulsion (32) du passage de référence.

8. Appareil selon l'une quelconque des revendications précédentes comprenant un agencement de soupape (38) pour diriger un écoulement d'un fluide à l'intérieur de l'objet tubulaire (22), dans lequel
le dispositif d'enregistrement (30) est configuré pour enregistrer en temps réel un ou plusieurs états de l'agencement de soupape (38) pendant le passage de référence contrôlé par l'homme du racleur (20) à travers l'objet tubulaire (22), et
le contrôleur (30) est programmé pour exécuter sélectivement le mode de contrôle automatique dans lequel le contrôleur (30) contrôle automatiquement l'agencement de soupape (38) pendant le passage ultérieur du racleur (20) à travers l'objet tubulaire (22) conformément au ou à chaque état enregistré de l'agencement de soupape (38) du passage de référence.

9. Appareil selon l'une quelconque des revendications précédentes, comprenant un capteur de niveau de contamination de fluide configuré pour détecter un niveau de contamination d'un fluide renvoyé depuis l'objet tubulaire (22), l'appareil comprenant en outre un dispositif de contrôle d'écoulement de fluide (40) pour diriger un écoulement du fluide renvoyé depuis l'objet tubulaire (22) dans un réservoir sélectionné parmi un réservoir de stockage de fluide propre (42) et un réservoir de stockage d'effluent (44), dans lequel le contrôleur (30) est programmé pour exécuter sélectivement le mode de contrôle automatique dans lequel le contrôleur (30) contrôle automatiquement le dispositif de contrôle d'écoulement de fluide (40) pendant le passage ultérieur du racleur (20) à travers l'objet tubulaire (22) conformément à la détection du niveau de contamination du fluide renvoyé depuis l'objet tubulaire (22).

10. Appareil selon l'une quelconque des revendications précédentes, comprenant au moins un capteur configuré pour détecter une condition d'un intérieur de l'objet tubulaire (22), dans lequel le contrôleur (30) est programmé pour exécuter sélectivement le mode de contrôle automatique dans lequel le contrôleur (30) contrôle automatiquement le dispositif de propulsion (32) pendant le passage ultérieur du racleur (20) à travers l'objet tubulaire (22) conformément à la condition détectée de l'intérieur de l'objet tubulaire (22).

11. Appareil selon l'une quelconque des revendications précédentes, dans lequel l'au moins un capteur comprend au moins un capteur de pression (48) configuré pour détecter un paramètre de pression d'un intérieur de l'objet tubulaire (22), dans lequel le contrôleur (30) est programmé pour exécuter sélectivement le mode de contrôle automatique dans lequel le contrôleur (30) contrôle automatiquement le dispositif de propulsion (32) pendant le passage ultérieur du racleur (20) à travers l'objet tubulaire (22) conformément au paramètre de pression détecté de l'intérieur de l'objet tubulaire (22) .

12. Appareil selon l'une quelconque des revendications précédentes, dans lequel l'au moins un capteur comprend au moins un capteur d'écoulement (50) configuré pour détecter un paramètre d'écoulement d'un intérieur de l'objet tubulaire (22), dans lequel le contrôleur (30) est programmé pour exécuter sélectivement le mode de contrôle automatique dans lequel le contrôleur (30) contrôle automatiquement le dispositif de propulsion (32) pendant le passage ultérieur du racleur (20) à travers l'objet tubulaire (22) conformément au paramètre d'écoulement détecté de l'intérieur de l'objet tubulaire (22) .

13. Appareil selon l'une quelconque des revendications précédentes, comprenant un dispositif d'entrée pour l'entrée manuelle d'une commande d'arrêt par un humain, dans lequel le contrôleur (30) est programmé pour arrêter le mode de contrôle automatique en réponse à l'entrée de la commande d'arrêt dans le dispositif d'entrée.

14. Procédé mis en œuvre par ordinateur pour contrôler le passage d'un racleur (20) à travers un objet tubulaire (22), le procédé mis en œuvre par ordinateur comprenant les étapes de :
enregistrement d'étapes de fonctionnement et de paramètres de fonctionnement d'un passage de référence contrôlé par l'homme du racleur (20) à travers l'objet tubulaire (22) ; et
exécution d'un mode de contrôle automatique dans lequel un passage ultérieur du racleur (20) à travers l'objet tubulaire (22) est automatiquement contrôlé conformément aux étapes de fonctionnement et aux paramètres de fonctionnement enregistrés du passage de référence, dans lequel le mode de contrôle automatique comprend le contrôle d'un dispositif de propulsion (32) pour propulser le racleur (20) à travers l'objet tubulaire (22).

15. Programme informatique comprenant un code informatique configuré pour exécuter le procédé mis en œuvre par ordinateur selon la revendication 14.
